# FASCICULE DE BREVET EUROPEEN

(11) **EP 0 660 006 B1**
(45) Date de publication et mention de la délivrance du brevet: **03.09.1997**
(21) Numéro de dépôt: 94402951.1
(22) Date de dépôt: 20.12.1994
(51) Int. Cl.: F16F 7/10, B60G 21/055

(54) **Elément résonateur dynamique et son procédé de montage**
Dynamisches Resonatorelement und sein Montageverfahren
Resonating dynamic damping element and its assembly

(30) Priorité: 24.12.1993 FR 9315721
(43) Date de publication de la demande: 28.06.1995
(73) Titulaire: CAOUTCHOUC MANUFACTURE ET PLASTIQUES, F-78000 Versailles (FR)
(72) Inventeur: de Fontenay, Etienne, F-58300 Decize (FR)
(74) Mandataire: Peuscet, Jacques

(56) Documents cités:
- EP-A- 0 141 003
- EP-A- 0 251 845
- EP-A- 0 381 566
- EP-A- 0 381 945
- EP-A- 0 384 799
- EP-A- 0 409 202
- DE-C- 4 309 425
- DE-U- 8 901 525
- US-A- 3 419 111

## Description

L'invention concerne, principalement, le domaine de la suspension d'un véhicule automobile ou celui de la suspension secondaire, c'est-à-dire celle placée entre bogie et caisse, d'un véhicule ferroviaire, l'une et l'autre desdites suspensions comportant une barre de torsion. Reliée par leviers à la suspension de chacune des roues d'un même essieu, une telle barre de torsion est, le plus généralement fixée à la caisse ou au chassis par deux paliers d'articulation élastique.

De manière plus générale, l'invention est relative à la réalisation de masses revêtues de composition élastomérique, faisant office d'élément résonateur dynamique, par l'intermédiaire d'une masse vibrante, et à leur montage sur un axe cylindrique, tel que, à titre d'exemple non limitatif, un arbre de transmission ou une barre de torsion, élément essentiel du confort d'une suspension de véhicule, lorsque ledit montage ne peut être réalisé par simple enfilage, en raison de l'encombrement diamétral des extrémités. La masse revêtue de composition élastomérique faisant office d'élément résonateur dynamique a pour objet de filtrer les vibrations, particulièrement aux fréquences acoustiques, agissant comme un batteur ou étouffeur dynamique.

Dans le domaine de l'invention, les réalisations les plus voisines font l'objet des documents EP 0408040 et EP 0409202 de TOKAI RUBBER INDUSTRIES. Ils décrivent des amortisseurs dynamiques destinés à amortir les vibrations d'arbres rotatifs. Bien que plus simples que les dispositifs antérieurs, lesdits amortisseurs dynamiques présentent l'inconvénient de nécessiter un montage sur l'arbre rotatif par enfilage par une extrémité de ce dernier. En conséquence, leur montage s'avère impossible lorsque lesdites extrémités présentent une disposition encombrante ou un diamètre supérieur à celui du corps central de l'arbre rotatif.

En revanche, dans un tout autre domaine, celui des paliers élastiques équipant une barre de torsion de véhicule automobile, diverses réalisations ont été proposées pour permettre un montage à force sur ladite barre de torsion, par ouverture desdits paliers.

Les documents EP 0104990 et EP 0251845 d'Automobiles Peugeot et Automobiles Citroën et le document EP 0227869 de la Régie Renault décrivent des paliers qui sont engagés sur la barre de torsion grâce à l'existence d'une fente refermée, dans ce cas, après passage forcé, le bridage dans un boîtier servant à la fixation sur le chassis.

La demanderesse a apporté une solution économique et de mise en oeuvre simple, pour le montage d'articulations élastiques, à force, sur une barre antidévers de véhicule automobile, solution qui fait l'objet du document FR 2643314. L'invention consiste à fabriquer séparément chacune des pièces de caoutchouc adhérisé à une armature semi-rigide, en plastomère, formée d'une bague fendue et solidarisée à la barre de torsion, par une matière adhésive durcie in situ après son passage par dessus la barre de torsion.

Si les solutions proposées dans les documents cités peuvent s'appliquer, sans difficulté, au montage de paliers d'articulation élastiques classiques, même lorsqu'un encombrement géométrique empêche leur montage à partir d'une extrémité de la barre de torsion, il n'en est plus de même pour la mise en place d'éléments résonateurs dynamiques qui comportent une masse vibrante liée à des composants élastiques, en raison de la masse et de la résistance de ladite masse vibrante. Ledit élément résonateur dynamique a pour effet de réduire, plus particulièrement, les vibrations bruyantes se produisant à des fréquences de 50 à 300 Hertz et de contribuer, de ce fait, au confort auditif de la conduite, en réduisant les risques de fatigue.

La présente invention a donc pour objectif de proposer une solution simple et économique d'éléments résonateurs dynamiques destinés à amortir et à filtrer les vibrations - plus particulièrement aux fréquences acoustiques - d'éléments vibrants. Lesdits éléments résonateurs dynamiques sont - plus particulièrement mais non exclusivement - destinés à être montés sur une barre de torsion dont les extrémités sont encastrées dans des organes récepteurs de la suspension.

Dans de telles configurations de la barre de torsion, il n'est, en effet, pas possible d'enfiler lesdits éléments résonateurs dynamiques par une extrémité de la barre de torsion, comme dans les montages classiques, ladite extrémité n'étant pas libre ou présentant un diamètre plus important que celui du corps sur lequel doivent être montés lesdits éléments résonateurs dynamiques.

L'invention a donc pour objet un élément résonateur dynamique formé d'une armature constituant la masse vibrante, noyée au sein d'une composition élastomérique de caractéristiques dynamiques appropriées, et susceptible de se monter sur un axe cylindrique, tel qu'une barre de torsion, grâce à l'existence d'une fente longitudinale, pratiquée le long d'une génératrice et traversant toute l'épaisseur de la paroi dudit élément résonateur dynamique.

L'invention a également pour objet le procédé de montage dudit élément résonateur dynamique sur l'axe cylindrique.

L'élément résonateur dynamique, selon l'invention, est caractérisé en ce que l'armature constituant la masse vibrante comporte une portion à section réduite faisant office de charnière irréversible, longitudinale, située dans un plan diamétralement opposé à celui de la fente longitudinale, et en ce que ledit élément résonateur dynamique comporte, sur sa face interne, une masse élastique de serrage, en composition élastomérique, destinée à en assurer la fixation, par montage serré sur le corps dudit axe cylindrique, tout en conservant audit élément résonateur dynamique une flexibilité fonctionnelle. Dans une variante de réalisation, la masse élastique de serrage est contituée d'une série de bossages radiaux de serrage. Dans une autre, elle prend la forme d'une couronne annulaire.

Dans une autre variante de réalisation, l'élément résonateur dynamique comporte des butées radiales de fin de course, soit disposées, sur sa face interne, entre lesdits bossages radiaux de serrage, soit venant compléter la masse élastique de serrage, et destinées à assurer l'amortissement, en cas de choc ou d'effort violent, par contact de frottement sur l'axe cylindrique.

Lesdits bossages radiaux de serrage présentent, préférentiellement, une section quasi-trapézoïdale, la fente longitudinale et la portion à section réduite faisant office de charnière irréversible étant situées dans l'intervalle de séparation entre deux bossages radiaux de serrage.

Dans une autre variante de réalisation, l'armature constituant la masse vibrante, noyée dans la composition élastomérique, lui est, en outre, intimement liée par voie physico-chimique.

Dans un autre mode de réalisation, les bossages radiaux de serrage sur l'axe cylindrique sont rendus solidaires de l'armature constituant la masse vibrante, par voie mécanique, grâce à l'existence de perforations pratiquées dans ladite armature.

Une variante de conception de l'armature constituant la masse vibrante consiste en la réalisation de la portion réduite faisant office de charnière irréversible sous la forme d'un rétrécissement symétrique en forme de diabolo.

Dans un autre mode de réalisation, la portion à section réduite faisant office de charnière irréversible, est constituée d'une simple encoche asymétrique à fond arrondi venant occuper la partie interne de ladite armature constituant la masse vibrante, sur une partie de son épaisseur.

Le procédé de montage de l'élément résonateur dynamique sur l'axe cylindrique, conformément à l'invention, est caractérisé en ce que l'angle d'ouverture de la fente longitudinale dudit élément résonateur dynamique, pour permettre son passage sur l'axe cylindrique, est tel que la mise en position puisse s'effectuer avec un effort faible ou nul, en ce que la fermeture de ladite fente longitudinale assure, sur la masse élastique de serrage ou sur les bossages radiaux de serrage, une contrainte dirigée radialement, permettant un blocage en position montée, grâce à l'intervention de la portion à section réduite faisant office de charnière irréversible de l'armature constituant la masse vibrante, et en ce que la force radiale à appliquer pour la fermeture afin d'assurer la fixation serrée dudit élément résonateur dynamique autour de l'axe cylindrique est telle qu'elle évite la réouverture de ladite fente longitudinale, sous l'effort de poussée dû à la précompression de ladite masse élastique de serrage ou desdits bossages radiaux de serrage.

L'invention ainsi que ses variantes seront mieux comprises à la lecture de la description accompagnant les dessins, dans lesquels :
- la figure 1 est une vue partielle d'une suspension arrière de véhicule schématisant l'emplacement d'une barre de torsion équipée d'un élément résonateur dynamique selon l'invention ;
- la figure 2 illustre, par une coupe transversale, une variante de l'élément résonateur dynamique à bossages radiaux de serrage ;
- la figure 3 propose une variante de l'élément résonateur dynamique équipé de butées radiales de fin de course ;
- la figure 4 montre, de manière isolée, l'armature constituant la masse vibrante ;
- la figure 5 décrit une réalisation de l'armature constituant la masse vibrante et met en évidence sa portion à section réduite faisant office de charnière irréversible dans la version où elle se présente sous la forme d'un rétrécissement symétrique en forme de diabolo ;
- la figure 6 offre une variante de l'élément résonateur dynamique dans laquelle la portion à section réduite faisant office de charnière irréversible de l'armature constituant la masse vibrante se présente sous la forme d'une encoche asymétrique à fond arrondi et la masse élastique de serrage présente une forme de couronne annulaire ;
- la figure 7 schématise, lors du montage sur un axe cylindrique, la force radiale à appliquer pour assurer la fermeture de la fente longitudinale.

Dans les figures, les mêmes références numériques désignent les mêmes composants de l'élément résonateur dynamique.

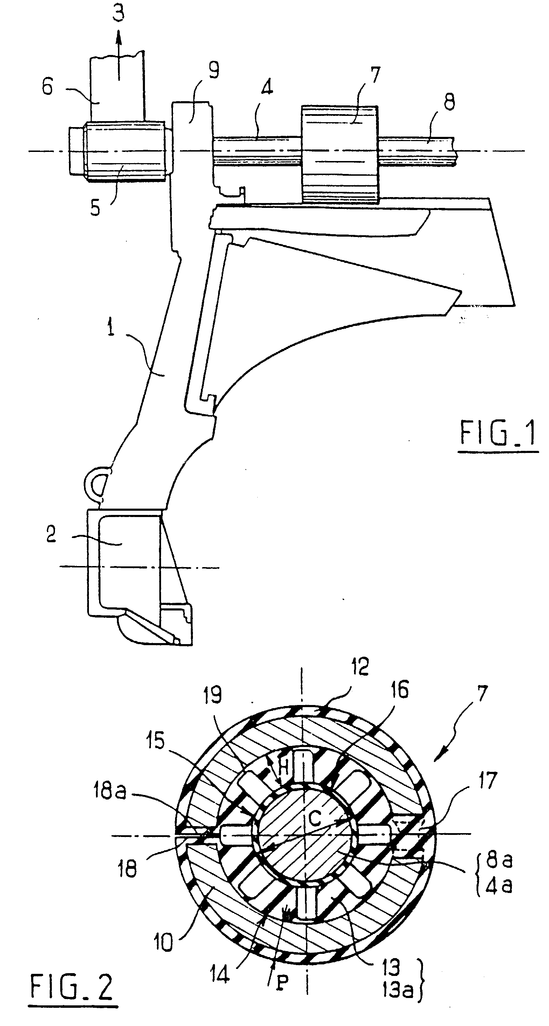

La figure 1 représente partiellement l'application de l'élément résonateur dynamique à la suspension arrière d'un véhicule automobile équipé d'une barre de torsion.

Ladite suspension comporte un bras tiré (1) assurant la liaison entre l'essieu - dont la fusée vient prendre place dans le logement de fusée (2) - et le chassis du véhicule (3) par l'intermédiaire d'une barre de torsion (4) dont l'extrémité encastrée (5), reçoit l'élément de liaison au chassis (6).

Ladite barre de torsion (4) est disposée transversalement, c'est-à-dire dans une direction orthogonale à celle du plan médian, vertical, du véhicule et est équipée d'au moins un élément résonateur dynamique (7) destiné à s'opposer à la résonance de ladite barre de torsion (4) sur l'un de ses modes propres particulièrement génant pour le confort acoustique du véhicule.

Dans la suspension illustrée, la barre de torsion (4) présente une extrémité encastrée (5) de diamètre supérieur à celui du corps même (8) de ladite barre de torsion (4), cette extrémité encastrée (5) venant prendre place, par encastrement, dans le logement prévu à cet effet porté par le prolongement supérieur (9) du bras tiré (1). Par voie de conséquence, l'élément résonateur dynamique (7), de forme générale cylindrique, comportant un alésage central destiné à recevoir le corps (8) de la barre de torsion (4) ne peut être monté par simple enfilage, à partir d'une extrémité, sur ladite barre de torsion (4). Le problème posé est donc celui d'un montage par passage sur ledit corps (8) de la barre de torsion (4) et du maintien serré de l'élément résonateur dynamique (7). Ce problème est résolu, partiellement, par la création d'une fente longitudinale pratiquée le long d'une génératrice et traversant la totalité de la paroi de l'élément résonateur dynamique (7).

La difficulté rencontrée pour l'élément résonateur dynamique est inhérente à la présence de l'armature constituant la masse vibrante dont l'épaisseur - contrairement à celle d'un palier d'articulation classique - est très importante par rapport à celle de l'élément résonateur dynamique lui-même. Il en en résulte une résistance de l'ensemble qui n'autorise pas une ouverture suffisante pour permettre le passage sur le corps (8) de la barre de torsion (4) sans modification de la conception de l'armature constituant la masse vibrante.

La figure 2 illustre, par une coupe transversale, une variante de l'élément résonateur dynamique selon l'invention, permettant de résoudre le problème posé par la résistance excessive de l'armature constituant la masse vibrante.

La figure illustre ledit élément résonateur dynamique (7), après montage sur l'axe cylindrique, tel que, à titre d'exemple non limitatif, une barre de torsion, dont les extrémités présentent une configuration ne permettant pas un montage par simple enfilage.

L'élément résonateur dynamique (7) devient, après fermeture, une pièce de révolution, de forme générale cylindrique, composée d'une armature constituant la masse vibrante (10) noyée au sein d'une composition élastomérique de caractéristiques dynamiques appropriées. Il comporte un alésage central (11) de diamètre (D) destiné à recevoir le corps (8a) d'un axe cylindrique (4a).

La composition élastomérique, au sein de laquelle est noyée l'armature constituant la masse vibrante (10), en forme l'enveloppage externe périphérique (12) et est conformée, dans la partie interne, en masse élastique de serrage (13a). Dans la variante représentée, ladite masse élastique de serrage (13a) prend la forme de bossages radiaux de serrage (13), préférentiellement de forme générale sensiblement trapézoïdale, dont la grande base (14) est au contact de l'armature constituant la masse vibrante (10). La hauteur (H) desdits bossages radiaux de serrage (13) est telle qu'un cercle fictif tangent à l'ensemble de leurs petites base (15) définit l'alésage central (11) dont le diamètre (D) est déterminé de manière à assurer la précompression de la composition élastomérique constituant les bossages radiaux de serrage (13) et est au plus égal au diamètre extérieur (C) de l'axe cylindrique (4a) qui peut, éventuellement, être revêtu d'un garnissage de protection (16), en composition élastomérique de faible épaisseur, garantissant, de ce fait, un montage serré sur ledit axe cylindrique (4a) de l'élément résonateur dynamique (7), après fermeture.

L'armature constituant la masse vibrante (10) se présente sous la forme de deux demi-cylindres formant un angle d'ouverture (A) et réunis par une portion à section réduite faisant office de charnière irréversible (17). Elle est réalisée dans un matériau de masse spécifique élevée puisque la résonance du système est directement fonction de la masse de ladite armature constituant la masse vibrante (10) ; elle est, le plus généralement, constituée d'un cylindre métallique de forte épaisseur et de faible limite élastique.

Elle comporte une portion à section réduite faisant office de charnière irréversible (17) et présente, dans le plan diamétralement opposé, une fente longitudinale (18a) qui autorise la fermeture de l'élément résonateur dynamique (7), à partir d'un angle (A) suffisant pour son montage sur l'axe cylindrique (4a), sans risque de rupture de l'armature constituant la masse vibrante (10) ou de réouverture de l'élément résonateur dynamique (7) après mise en place serrée.

Ladite fente longitudinale (18a) est pratiquée le long d'une génératrice de l'armature constituant la masse vibrante (10) et traverse toute l'épaisseur de la paroi (P) de -l'élément résonateur dynamique (7), y compris celle de l'enveloppage externe périphérique (12). Elle est, préférentiellement, disposée, comme la portion à section réduite faisant office de charnière irréversible (17) de l'armature constituant la masse vibrante (10) - située dans un plan diamétralement opposé - dans l'intervalle de séparation (19) entre deux bossages radiaux de serrage (13), de manière à éviter que l'ouverture de l'élément résonateur dynamique (7) ne se produise au travers de la masse de ces derniers.

L'axe cylindrique (4a) est rendu mécaniquement solidaire de l'élément résonateur dynamique (7) par un montage serré obtenu par la fermeture de l'angle d'ouverture (A), opération venant assurer une contrainte dirigée radialement sur les bossages radiaux de serrage (13), et par le fait que le diamètre (D) de l'alésage central (11) est au plus égal, mais préférentiellement légèrement inférieur au diamètre extérieur (C) de l'axe cylindrique (4a), éventuellement revêtu de son garnissage de protection (16).

Avantageusement, pour obtenir un effet de serrage plus efficace, ledit diamètre (D) de l'alésage central (11) prend une valeur comprise entre 0,50 et 0,99 fois celle du diamètre extérieur (C) de l'axe cylindrique (4a), éventuellement revêtu de son garnissage de protection (16).

La fente longitudinale (18) est obtenue directement par moulage de la composition élastomérique sur une armature constituant la masse vibrante (10), elle-même pourvue préalablement d'une fente longitudinale (18a).

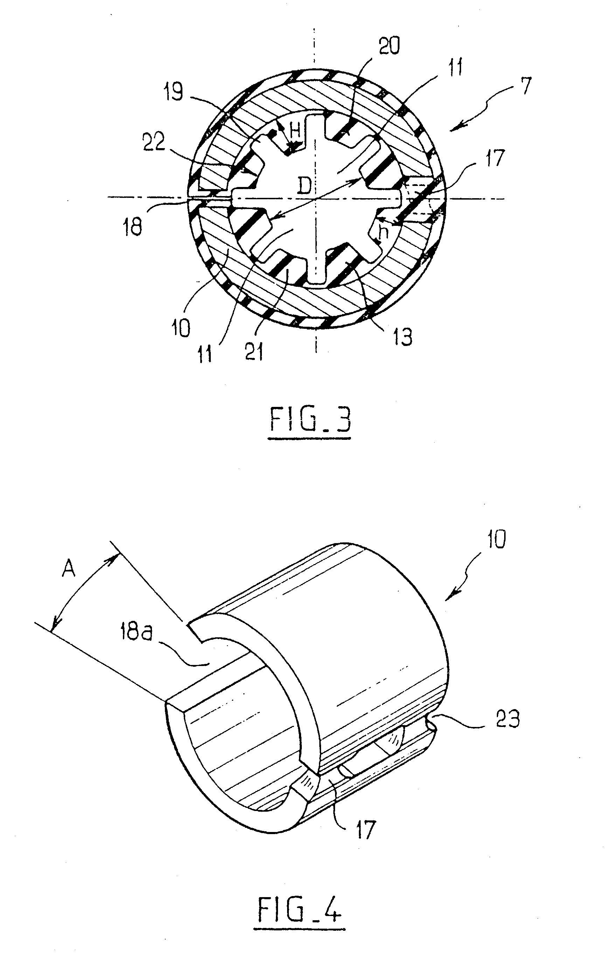

La figure 3 propose une variante, fermée mais non montée sur l'axe cylindrique, de l'élément résonateur dynamique (7), dans laquelle une partie des bossages radiaux de serrage (13) a été remplacée par des butées radiales de fin de course (20), le plus généralement réalisées dans la même composition élastomérique que celle constituant lesdits bossages radiaux de serrage (13). Dans la variante illustrée, un bossage radial de serrage (13) sur deux a été remplacé par une butée radiale de fin de course (20), la longueur de l'intervalle de séparation (19) n'ayant pas été modifiée par rapport à la variante de la figure précédente.

Il est bien évident, cependant, que le nombre et la disposition des bossages radiaux de serrage (13), des butées radiales de fin de course (20), comme la longueur de l'intervalle de séparation (19) peuvent être adaptés, par l'homme de l'art, en fonction des nécessités de l'application, sans sortir du cadre de l'invention.

Comme dans la variante précédente, la disposition desdites butées radiales de fin de course (20) et celle des bossages radiaux de serrage (13), est choisie de manière à ce que la fente longitudinale (18) débouche, en direction de l'alésage central (11) de l'élément résonateur dynamique (7), préférentiellement dans un intervalle de séparation (19), placé soit entre deux bossages radiaux de serrage (13) ou deux butées radiales de fin de course (20), soit entre un bossage radial de serrage (13) et une butée radiale de fin de course (20).

Avantageusement, lesdites butées radiales de fin de course (20) présentent une section globalement trapézoïdale, leur grande base (21) étant au contact de l'armature constituant la masse vibrante (10) et leur petite base (22) se trouvant placée en direction de l'alésage central (11). Leur hauteur (h) est inférieure de 20 à 50 % à la hauteur (H) des bossages radiaux de serrage (13), leur fonction consistant à intervenir par contact desdites petites bases (22) sur l'axe cylindrique (4a) pour amortir les chocs violents, seulement en fin de course, lorsque sont écrasés par l'effort les bossages radiaux de serrage (13).

La figure 4 montre, de manière isolée, l'armature constituant la masse vibrante, en position ouverte.

Réalisée sous forme générale d'un cylindre creux, en métal de masse spécifique élevée, ladite armature constituant la masse vibrante (10), a une section en couronne qui occupe la quasi totalité de l'épaisseur de la paroi (P) de l'élément résonateur dynamique (7), mesurée au droit d'un intervalle de séparation (19). Elle présente une fente d'ouverture (18a), longitudinale, pratiquée le long d'une génératrice du cylindre qui forme un angle d'ouverture (A) suffisant pour permettre le passage, sans effort, de l'axe cylindrique (4a) dans l'alésage central (11) de l'élément résonateur dynamique (7) et une saignée longitudinale (23), pratiquée le long d'une génératrice diamétralement opposée, qui autorise la formation de la portion à section réduite faisant office de charnière irréversible (17) et permet d'abaisser sa résistance pour y localiser la déformation au moment de la fermeture.

Selon le matériau choisi pour la réalisation de ladite armature constituant la masse vibrante (10), la saignée longitudinale (23) réduit l'épaisseur de la couronne d'une valeur comprise entre 0,10 et 0,80, dans la portion à section réduite faisant office de charnière irréversible (17).

De ce fait, l'effort nécessaire pour provoquer la fermeture de la fente longitudinales (18a) se trouve sensiblement réduit, grâce à la localisation des contraintes dans cette zone, sans que puisse se produire de cassure le long de la saignée longitudinale (23). Ainsi, après montage de l'élément résonateur dynamique (7) sur le corps (8a) de l'axe cylindrique (4a), la fermeture de la fente longitudinale (18) se fait sous un effort modéré.

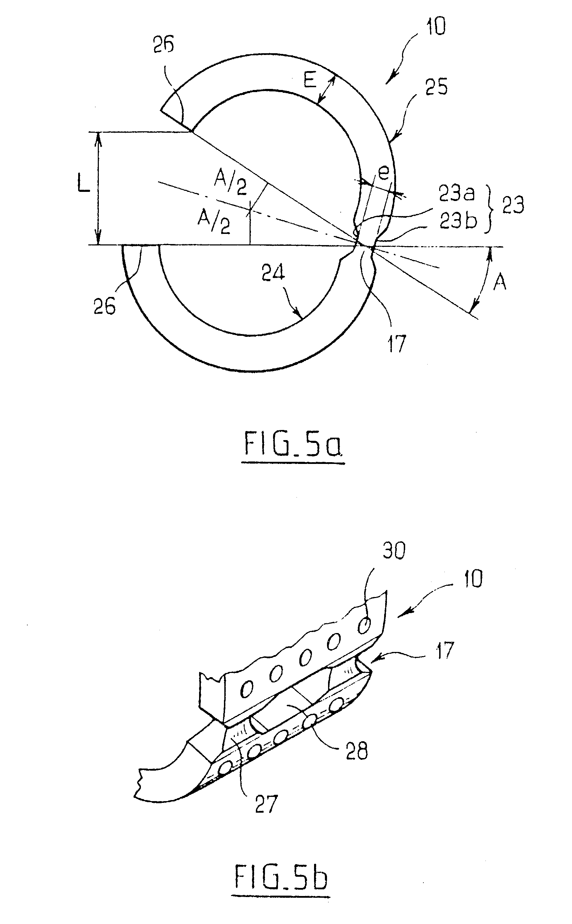

La figure 5 décrit une réalisation particulière de l'armature constituant la masse vibrante (10) de l'élément résonateur dynamique (7).

Elle met en évidence une variante de sa portion à section réduite faisant office de charnière irréversible (17), dans la version où elle se présente sous la forme d'un rétrécissement symétrique en forme de diabolo.

La vue 5a montre qu'une telle forme est obtenue par réalisation d'une saignée longitudinale (23), pratiquée selon deux gorges symétriques, l'une interne (23a), l'autre externe (23b), pratiquées, au droit l'une de l'autre, respectivement sur la face interne (24) et sur la face externe (25) de l'armature constituant la masse vibrante (10). Dans cette configuration, le rapport de l'épaisseur (e) de la portion à section réduite faisant office de charnière irréversible (17) à l'épaisseur (E) de la section pleine de la couronne cylindrique est, le plus généralement, compris entre 0,3 et 0,7.

Préférentiellement, la largeur (L) de la fente longitudinale (18) de l'élément résonateur dynamique (7) est au moins égale au diamètre (C) de l'axe cylindrique (4a), dans la zone du corps (8a), éventuellement revêtu du garnissage de protection (16).

Par voie de conséquence, l'angle d'ouverture (A), défini comme ayant son sommet sur l'axe longitudinal de ladite portion à section réduite faisant office de charnière irréversible (17) et ses côtés dans le prolongement des lèvres (26) de la fente longitudinale (18a) de l'armature constituant la masse vibrante (10), doit présenter une valeur suffisante pour permettre le passage sans effort du corps (8a) de l'axe cylindrique (4a) dans l'alésage central (11) de l'élément résonateur dynamique (7).

Avantageusement mais non obligatoirement, la portion à section réduite faisant office de charnière irréversible (17) peut être constituée, comme illustré sur la vue 5b, non plus d'une portion à section réduite continue, mais d'un succession d'au moins deux plots individuels (27), par exemple en forme de bobine, séparés par un (ou des) évidement(s) (28). Cette configuration présente l'avantage de réduire encore la résistance de l'armature constituant la masse vibrante (10).

Sur la variante représentée, l'armature constituant la masse vibrante (10) présente une série de perforations (30) destinées à assurer, par voie mécanique, la liaison entre ladite armature constituant la masse vibrante (10) et la composition élastomérique au sein de laquelle elle est noyée.

Lesdites perforations (30) peuvent se présenter sous forme de canaux, débouchant ou non, de section arrondie, ovale ou en forme de fente.

Lors du moulage de l'élément résonateur dynamique (7), sous l'effet de la température et de la pression, la composition élastomérique, destinée à former l'enveloppage externe périphérique (12), les bossages radiaux de serrage (13) et, éventuellement, les butées radiales de fin de course (20), se trouve plastifiée et pénètre dans lesdites perforations (30) en créant des ponts de gomme qui relient, ainsi, de façon purement mécanique, les divers constituants en composition élastomérique et l'armature constituant la masse vibrante (10).

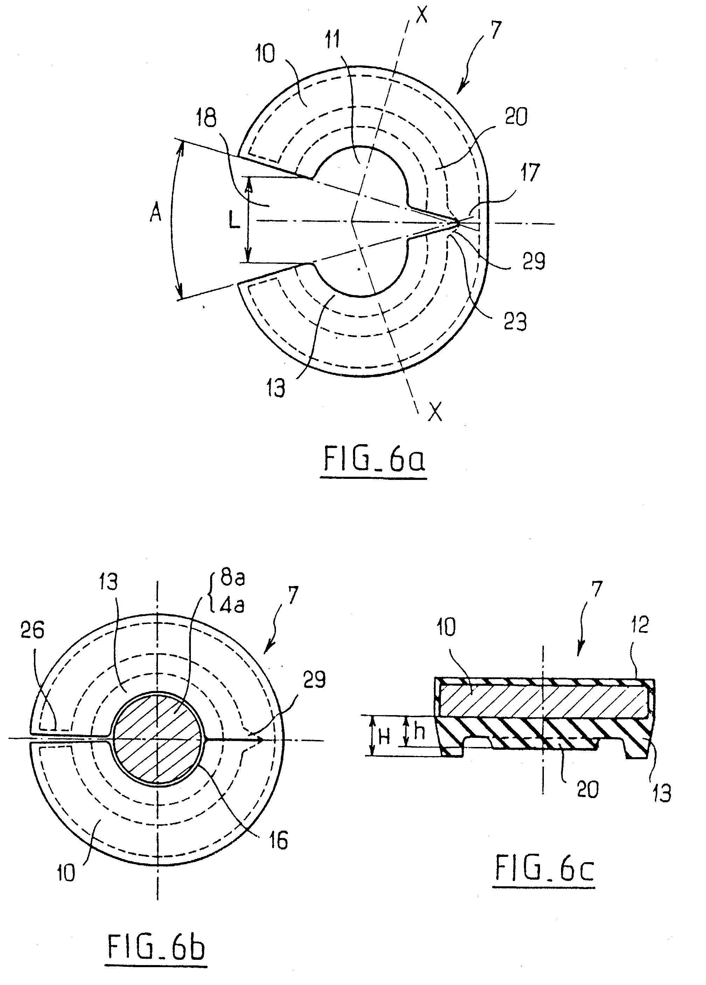

La figure 6 offre une variante de l'élément résonateur dynamique dans laquelle la portion à section réduite faisant office de charnière irréversible (17) de l'armature constituant la masse vibrante (10) se présente sous la forme d'une encoche asymétrique à fond arrondi (29) et la masse élastique de serrage (13a) présente une forme de couronne annulaire.

La vue 6a montre l'élément résonateur dynamique (7) en position ouverte, prêt à accueillir, dans son alésage central (11), défini par le diamètre intérieur de la masse élastique de serrage (13a), le corps (8a) de l'axe cylindrique (4a).

La présente variante de l'élément résonateur dynamique (7) comporte des butées radiales de fin de course (20).

L'encoche asymétrique à fond arrondi (29) est obtenue par réalisation d'une seule saignée longitudinale (23), pratiquée à la forme appropriée, le long de la génératrice de l'armature constituant la masse vibrante (10) située dans le plan diamétralement opposé à celui de la fente longitudinale (18). La vue 6b illustre le même élément résonateur dynamique (7), en position refermée sur le corps (8a) de l'axe cylindrique (4a), après montage, lorsque sont rapprochées les lèvres (26) de l'armature constituant la masse vibrante (10). Dans cette position finale, l'effort radial de fermeture, qui reste faible, vient appliquer la masse élastique de serrage (13a) en forme de couronne annulaire contre ledit axe cylindrique (4a) et induit, ainsi, un frettage radial sur la composition élastomérique, matériau constitutif de ladite masse élastique de serrage (13a).

L'effet de frettage assure le maintien en place de l'élément résonateur dynamique (7) sur l'axe cylindrique (4a) par la force de contact ainsi créée.

La vue 6c, demi-section par XX de la vue 6a, montre la position de l'armature constituant la masse vibrante (10), noyée au sein de la composition élastomérique qui vient former son enveloppage externe périphérique (12) et la masse élastique de serrage (13a) en forme de couronne annulaire, comme les butées radiales de fin de course (20).

Prise en plein corps de l'élément résonateur dynamique (7), hors de la portion à section réduite faisant office de charnière irréversible (17), la vue 6c illustre la constitution dudit élément résonateur dynamique (7) quelle que soit la variante de forme donnée à la portion à section réduite faisant office de charnière irréversible (17).

L'armature constituant la masse vibrante (10) occupe la majeure partie du volume (V) de l'élément résonateur dynamique (7), soit entre 60 et 95 %.

Elle peut être simplement noyée dans la composition élastomérique qui l'entoure et la protège de la corrosion ou, dans une variante de réalisation, lui être liée intimement par un procédé physico-chimique, tel que, à titre d'exemple non limitatif, une adhérisation réalisée simultanément à l'opération de moulage. Elle peut également lui être liée par simple voie mécanique, dans la variante où l'armature constituant la masse vibrante (10) comporte des perforations (30).

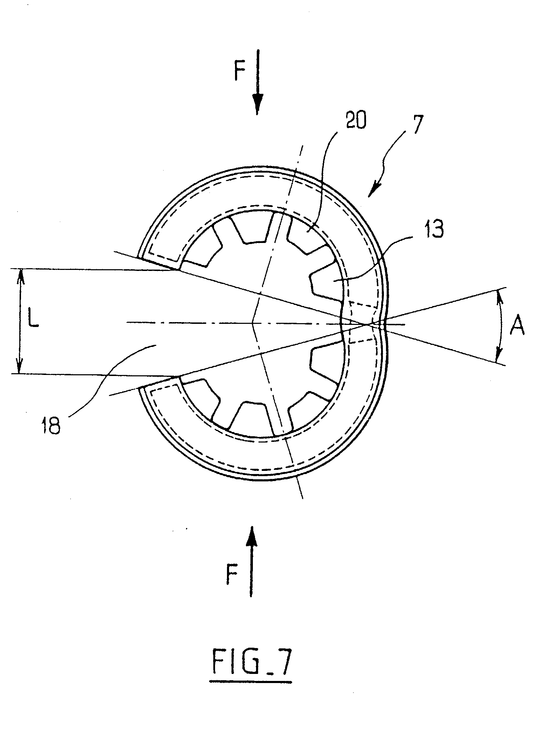

La figure 7 schématise, lors du montage sur un axe cylindrique (4a), la force radiale à appliquer pour assurer la fermeture de la fente longitudinale (18) de l'élément résonateur dynamique (7).

Dans cette opération, il est essentiel que la force radiale (F) à appliquer conserve une valeur faible pour permettre un montage aisé sur la chaîne de fabrication des véhicules, mais, en même temps, elle doit permettre la fixation serrée de l'élément résonateur dynamique (7) sur le corps (8a) de l'axe cylindrique (4a) pour éviter tout glissement axial.

La force radiale de fermeture (F) à appliquer vient alors exercer une contrainte, dirigée radialement, sur les bossages radiaux de serrage (13). Simultanément, cette contrainte induit, dans l'élément résonateur dynamique (7) un effet de frettage des constituants en composition élastomérique ayant pour conséquence une précompression assurant la liaison mécanique avec le corps (8a) de l'axe cylindrique (4a).

Dans un exemple pratique, un élément résonateur dynamique (7), destiné à être monté sur une barre de torsion (4) est réalisé par moulage, en moule clos, autour d'une armature constituant la masse vibrante (10), d'une composition élastomérique de caractéristiques dynamiques appropriées, c'est-à-dire d' une dureté de 50 à 60 unités Shore et d' un amortissement, à une fréquence de 150 Hertz, mesuré par sa valeur de tangente ϕ, au moins égal à 12 %.

Pour constituer un élément résonateur de dimensions appropriées à l'application, soit d'un diamètre extérieur de 65 millimètres et d'une hauteur de 55 millimètres environ, la masse choisie pour l'armature constituant la masse vibrante (10) sera comprise entre 450 et 500 grammes, selon les caractéristiques de l'application.

L'action de la pression et de la température de moulage assure, simultanément, la vulcanisation des compositions élastomériques et, éventuellement,la liaison interne, physico-chimique avec l'armature constituant la masse vibrante (10) si celle-ci a reçu une préparation de surface adéquate.

L'angle d'ouverture (A) autorise une largeur (L) entre les lèvres (26) de ladite fente longitudinale (18) de 25 millimètres au moins, permettant l'introduction de la barre de torsion (4) dans l'alésage central (11) défini par un cercle fictif tangent aux petites bases (15) des bossages radiaux de serrage (13) qui, dans l'application, présentent une hauteur (H) d'une dizaine de millimètres.

Dans la variante présentant des butées radiales de fin de course (20), la hauteur (h) de ces dernières est de l'ordre de 5 à 8 millimètres.

L'élément résonateur dynamique (7) fonctionne, dans cette application, dans un environnement thermique sévère, de 80 °C en continu, la température pouvant atteindre 100 °C de manière intermittente. Dans ces conditions, après montage serré, l'élément résonateur dynamique (7) doit présenter une résistance au glissement axial supérieure à 20 DaN.

L'ensemble de ces exigences est satisfait par l'application d'une force radiale de fermeture (F) suffisante pour assurer, à la fois le montage serré sur la barre de torsion (4) et la résistance au glissement axial, mais d'une valeur suffisamment faible pour rester applicable, sans nécessité d'outillage complexe, sur la chaîne de montage.

Préférentiellement, la force radiale de fermeture (F) a une valeur au moins égale à 2000 Newtons et au plus égale à 5000 Newtons.

En résumé, l'élément résonateur dynamique selon l'invention présente, par rapport aux solutions connues de l'art antérieur, les avantages suivants :
- il est réalisable dans des conditions économiques avantageuses par rapport aux amortisseurs dynamiques de l'art antérieur, car l'existence de sa portion à section réduite faisant office de charnière irréversible dispense le fabricant d'un nombre d'opérations mécaniques consommatrices de main d'oeuvre, donc coûteuses, telles que des perçages, des taraudages, la pose de vis ou de goupilles de fermeture, nécessitées par les dispositifs de l'art antérieur ;
- il permet l'introduction, sans effort, dans son alésage central, de l'axe cylindrique sur lequel il doit se monter, même lorsque ce dernier présente, à ses extrémités, un encombrement interdisant un montage par simple enfilage ;
- il requiert, pour la fermeture de la fente longitudinale, un effort modéré, praticable sur chaîne de montage, mais suffisant pour assurer une résistance au glissement axial, grâce à la précompression exercée sur la masse élastique de serrage ;
- au niveau de l'utilisation sur barre de torsion, il garantit des débattements fonctionnels maximaux et un filtrage des vibrations acoustiques efficace, sans glissement ;
- il est adaptable à d'autres applications dans lesquelles il peut assurer, non plus une fonction de résonateur ou de batteur, mais une fonction d'articulation, de palier ou de support ;
- en cas d'avarie, il autorise un remplacement aisé des éléments résonateurs dynamiques détériorés.

En conclusion, l'élément résonateur dynamique, objet de l'invention offre une grande facilité de montage dans des applications variées.

Sans sortir du cadre de l'invention, l'homme de l'art pourra combiner plusieurs variantes de l'élément résonateur dynamique décrites à titre d'exemples non limitatifs.

## Revendications

1. Elément résonateur dynamique (7) formé d'une armature constituant la masse vibrante (10), noyée au sein d'une composition élastomérique de caractéristiques dynamiques appropriéés, caractérisé en ce que l'élément est susceptible de se monter par passage sur un axe cylindrique (4a), tel qu'une barre de torsion (4) dans une suspension de véhicule automobile, grâce à l'existence d'une fente longitudinale (18), pratiquée le long d'une génératrice et traversant toute l'épaisseur de la paroi (P) dudit élément résonateur dynamique (7), l'élément étant encore caractérisé en ce que
- ladite armature constituant la masse vibrante (10) comporte une portion à section réduite faisant office de charnière irréversible (17), longitudinale, située dans un plan diamétralement opposé à celui de la fente longitudinale (18), ledit élément résonateur dynamique (7) comportant, sur sa face interne, une masse élastique de serrage (13a), en composition élastomérique, destinée à en assurer la fixation par montage serré sur le corps (8a) dudit axe cylindrique (4a), tout en conservant audit élément résonateur dynamique (7) une flexibilité fonctionnelle.

2. Elément résonateur dynamique (7) selon la revendication 1, caractérisé en ce que la masse élastique de serrage (13a) prend la forme d'une couronne annulaire de diamètre intérieur (D).

3. Elément résonateur dynamique (7) selon la revendication 1, caractérisé en ce que
- la masse élastique de serrage (13a) prend la forme de bossages radiaux de serrage (13),
en ce que
- lesdits bossages radiaux de serrage (13) présentent une section quasi trapézoïdale dont la grande base (14) est située au contact de l'armature constituant la masse vibrante (10) et la petite base (15) est dirigé vers l'alésage central (11) défini par un cercle fictif tangent à l'ensemble desdites petites bases (15),
et en ce que
- la disposition desdits bossages radiaux de serrage (13) est telle que la fente longitudinale (18) vient déboucher dans un intervalle de séparation (19) entre deux desdits bossages radiaux de serrage (13), et que la portion à section réduite faisant office de charnière irréversible (17) se trouve localisée dans l'intervalle de séparation (19) diamétralement opposé.

4. Elément résonateur dynamique (7) selon l'une des revendications 1 à 3, caractérisé en ce que le diamètre (D) de son alésage central (11) présente une valeur comprise entre 0,50 et 0,99 fois celle du diamètre extérieur (C) de l'axe cylindrique (4a) éventuellement revêtu d'un garnissage de protection (16), afin de permettre un montage serré sur l'axe cylindrique (4a).

5. Elément résonateur dynamique (7), selon l'une des revendications 3 ou 4, caractérisé en ce que des butées radiales de fin de course (20), en composition élastomérique, de section quasi trapézoïdale, viennent se subsituer à une partie des bossages radiaux de serrage (13), ou compléter la masse élastique (13a) en forme de couronne annulaire afin d'amortir les chocs violents.

6. Elément résonateur dynamique (7), selon la revendication 5, caractérisé en ce que la hauteur (h) des butées radiales de fin de course (20) est inférieure de 20 à 50 % à la hauteur (H) des bossages radiaux de serrage (13) ou à l'épaisseur de la masse élastique (13a) en forme de couronne annulaire.

7. Elément résonateur dynamique (7), selon l'une des revendications 1 à 6, caractérisé en ce que la portion à section réduite faisant office de charnière irréversible (17) de l'armature constituant la masse vibrante (10) présente une réduction d'une valeur de 0,20 à 0,90 par rapport à la section pleine de la couronne cylindrique formant ladite armature constituant la masse vibrante (10).

8. Elément résonateur dynamique (7), selon l'une des revendications 1 à 7, caractérisé en ce que la portion à section réduite faisant office de charnière irréversible (17) se présente sous la forme d'un rétrécissement symétrique en forme de diabolo.

9. Elément résonateur dynamique (7), selon la revendication 8, caractérisé en ce que la portion à section réduite faisant office de charnière irréversible (17) se présente sous la forme d'une succession d'au moins deux plots individuels (27) séparés par un (ou des) évidement(s) (28).

10. Elément résonateur dynamique (7) selon l'une des revendications 1 à 7, caractérisé en ce que la portion à section réduite faisant office de charnière irréversible (17) se présente sous la forme d'une encoche asymétrique à fond arrondi (29).

11. Elément résonateur dynamique (7) selon l'une des revendications 1 à 10, caractérisé en ce que l'armature constituant la masse vibrante (10) est liée intimement, par voie physico-chimique, à la composition élastomérique au sein de laquelle elle est noyée, par adhérisation in situ pratiquée au moment du moulage.

12. Elément résonateur dynamique (7) selon l'une des revendications 1 à 10, caractérisé en ce que l'armature constituant la masse vibrante (10) est liée, par voie mécanique, à la composition élastomérique dans laquelle elle est noyée grâce à la présence de perforations (30), pratiquées dans ladite armature constituant la masse vibrante (10), qui permettent la création de ponts de gomme.

13. Procédé de montage d'un élément résonateur dynamique (7) conforme à l'une des revendications 1 à 12 sur le corps (8a) d'un axe cylindrique (4a), tel qu'une barre de torsion (4) destinée à la suspension d'un véhicule automobile, caractérisé en ce qu'il comprend les phases suivantes :
- mise en position, grâce à l'existence d'une fente longitudinale (18), par passage dudit axe cylindrique (4a) dans l'alésage central (11) dudit élément résonateur dynamique (7), alésage défini soit par l'épaisseur de la masse élastique de serrage (13a), soit par un cercle fictif tangent aux petites bases (15) des bossages radiaux de serrage (13), grâce à une largeur entre les lèvres (26) de ladite fente longitudinale (18) au moins égale au diamètre (C) de l'axe cylindrique (4a) éventuellement revêtu de son garnissage de protection (16),
- blocage en position montée par fermeture de ladite fente longitudinale (18) par rapprochement des lèvres (26), sous l'effet d'une force radiale (F) de fermeture,
ledit procédé étant encore caractérisé en ce que
- l'angle d'ouverture (A) de la fente longitudinale (18) dudit élément résonateur dynamique (7) pour permettre son passage sur l'axe cylindrique (4a) est tel que la mise en position puisse s'effectuer avec un effort faible ou nul,
en ce que
- la fermeture de ladite fente longitudinale (18) assure, sur la masse élastique de serrage (13a) ou sur les bossages radiaux de serrage (13) une contrainte dirigée radialement, permettant un blocage en position montée, grâce à l'intervention d'une portion à section réduite faisant office de charnière irréversible (17) de l'armature constituant la masse vibrante (10),
et en ce que
- la force radiale (F) à appliquer pour la fermeture de ladite fente longitudinale (18) afin d'assurer la fixation serrée dudit élément résonateur dynamique (7) autour de l'axe cylindrique (4a) est telle qu'elle évite la réouverture de ladite fente longitudinale (18), sous l'effort de poussée dû à la précompression de la masse élastique de serrage (13a) ou des bossages radiaux de serrage (13).

## Patentansprüche

1. Dynamisches Resonatorelement (7), das aus einer die Schwingungsmasse darstellenden Einlage (10) besteht, die in eine Elastomerzusammensetzung mit geeigneten dynamischen Eigenschaften eingebettet ist, Element dadurch gekennzeichnet daß das durch das Vorhandensein eines längsgerichteten, längs einer Mantellinie ausgebildeten und die ganze Dicke der Wandung (P) des dynamischen Resonatorelements (7) durchquerenden Schlitzes (18) durch Aufschieben auf eine zylindrische Achse (4a), wie z. B. einem Torzionstab (4) in einer Kraftfahrzeug-Aufhängung, montierbar ist, Resonatorelement noch dadurch gekennzeichnet,
- daß die die Schwingungsmasse darstellenden Einlage (10) einen Abschnitt mit verringertem Querschnitt aufweist, der als ein längsgerichtetes, nicht umkehrbares Scharnier (17) dient, das sich in einer zu der des längsgerichteten Schlitzes (18) diametral gegenüberliegenden Ebene befindet,
und
das dynamische Resonatorelement (7) auf seiner Innenseite eine elastische Klemm-Masse (13a) aus einer Elastomerzusammensetzung aufweisend, die dazu bestimmt ist, seine Befestigung durch Festklemmen auf dem Schaft (8a) der zylindrischen Achse (4a) sicherzustellen, wobei das dynamische Resonatorelement (7) eine zweckentsprechende Flexibilität beibehält.

2. Dynamisches Resonatorelement (7) nach Anspruch 1, dadurch gekennzeichnet, daß die elastische Klemm-Masse (13a) die Form eines ringförmigen Kranzes mit dem Innendurchmesser (D) hat.

3. Dynamisches Resonatorelement (7) nach Anspruch 1, dadurch gekennzeichnet,
- daß die elastische Klemm-Masse (13a) die Form von radialen Klemm-Höckern (13) hat,
- daß die radialen Klemm-Höcker (13) einen quasi trapezförmigen Querschnitt aufweisen, dessen große Grundseite (14) an der die Schwingungsmasse darstellenden Einlage (10) anliegt und dessen kleine Grundseite (-15) zur zentralen Bohrung (11) hin gerichtet ist, die von einem fiktiven Kreis definiert wird, der sämtliche kleine Grundseiten (15) tangiert,
und
- daß die radialen Klemm-Höcker (13) derart angeordnet sind, daß der längsgerichtete Schlitz (18) in einen Trenn-Zwischenraum (19) zwischen zwei radialen Klemm-Höckern (13) mündet und daß sich der als ein nicht umkehrbares Scharnier (17) dienende Abschnitt mit verringertem Querschnitt genau im gegenüberliegenden Trenn-Zwischenraum (19) befindet.

4. Dynamisches Resonatorelement (7) nach einem der Ansprüche 1 bis 3, dadurch gekennzeichnet, daß der Durchmesser (D) seiner zentralen Bohrung (11) einen zwischen dem 0,50- und 0,99-fachen desjenigen des Außendurchmessers (C) der möglicherweise mit einem Schutztzüberzug (16) umkleideten zylindrischen Achse (4a) liegenden Wert aufweist, um ein Festklemmen auf der zylindrischen Achse (4a) zu ermöglichen.

5. Dynamisches Resonatorelement (7) nach einem der Ansprüche 3 oder 4, dadurch gekennzeichnet, daß radiale Endanschläge (20) aus einer Elastomerzusammensetzung mit quasi trapezförmigem Querschnitt an die Stelle eines Teils der radialen Klemm-Höcker (13) treten oder die elastische Masse (13a) in Form eines ringförmigen Kranzes vervollständigen, um die starken Stöße zu dämpfen.

6. Dynamisches Resonatorelement (7) nach Anspruch 5, dadurch gekennzeichnet, daß die Höhe (h) der radialen Endanschläge (20) kleiner ist als 20 bis 50% der Höhe (H) der radialen Klemm-Höcker (13) oder der Dicke der elastischen Masse (13a) in Form eines ringförmigen Kranzes.

7. Dynamisches Resonatorelement (7) nach einem der Ansprüche 1 bis 6, dadurch gekennzeichnet, daß der als nicht umkehrbares Scharnier dienende Abschnitt mit verringertem Querschnitt (17) der die Schwingungsmasse darstellenden Einlage (10) in bezug auf den vollen Querschnitt des zylindrischen Kranzes der die Schwingungsmasse darstellenden Einlage (10) eine Wertverringerung von 0,20 bis 0,90 aufweist.

8. Dynamisches Resonatorelement (7), nach einem der Ansprüche 1 bis 7, dadurch gekennzeichnet, daß der als nicht umkehrbares Scharnier dienende Abschnitt mit verringertem Querschnitt (17) die Form einer symmetrischen Verjüngung in Gestalt eines Doppelkegels hat.

9. Dynamisches Resonatorelement (7) nach Anspruch 8, dadurch gekennzeichnet, daß der als nicht umkehrbares Scharnier dienende Abschnitt mit verringertem Querschnitt (17) die Form einer Folge von wenigstens zwei einzelnen, von einer (oder mehreren) Aussparung(en) (28) getrennten Blöcken (27) hat.

10. Dynamisches Resonatorelement (7) nach einem der Ansprüche 1 bis 7, dadurch gekennzeichnet, daß der als nicht umkehrbares Scharnier dienende Abschnitt mit verringertem Querschnitt (17) die Form einer asymmetrischen Kerbe (29) mit gerundetem Boden hat.

11. Dynamisches Resonatorelement (7) nach einem der Ansprüche 1 bis 10, dadurch gekennzeichnet, daß die die Schwingungsmasse darstellende Einlage (10) durch ein physikalisch-chemisches Verfahren innig mit der Elastomerzusammensetzung verbunden ist, in die sie durch das im Moment der Formung erfolgende Verkleben in der richtigen Lage eingebettet wird.

12. Dynamisches Resonatorelement (7), nach einem der Ansprüche 1 bis 10, dadurch gekennzeichnet, daß die die Schwingungsmasse darstellende Einlage (10) mit der Elastomerzusammensetzung, in der sie eingebettet ist, durch ein mechanisches Verfahren mittels vorhandenen, in der die Schwingungsmasse darstellenden Einlage (10) ausgebildeten Perforationen (30), die die Ausbildung von Stegen aus Gummi ermöglichen, verbunden ist.

13. Verfahren zur Montage eines dynamischen Resonatorelements (7) nach einem der Ansprüche 1 bis 12 auf dem Schaft (8a) einer zylindrischen Achse (4a), wie z. B. einem zur Aufhängung bei einem Kraftfahrzeug bestimmten Torsionsstab (4), gekennzeichnet dadurch daß die folgenden Schritte umfaßt:
- Positionieren durch Einschieben der zylindrischen Achse (4a) in die zentrale Bohrung (11) des dynamischen Resonatorelements (7) dank eines vorhandenen längsgerichteten Schlitzes (18), wobei die Bohrung entweder durch die Dicke der elastischen Klemm-Masse (13a) oder durch einen fiktiven, die kleinen Grundseiten (15) der radialen Klemm-Höcker (13) tangierenden Kreis definiert wird, und dank einer Breite zwischen den Lippen (26) des längsgerichteten Schlitzes (18), die wenigstens gleich dem Durchmesser (C) der möglicherweise mit einem Schutzüberzug (16) umkleideten zylindrischen Achse (4a) ist,
- Festklemmen in der eingenommenen Position durch Schließen des längsgerichteten Schlitzes (18) durch Annähern der Lippen (26) unter der Wirkung einer radialen Schließkraft (F), Verfahren noch gekennzeichnet, dadurch
- daß der öffnungswinkel (A) des längsgerichteten Schlitzes (18) des dynamischen Resonatorelements (7), um dessen Aufschieben auf die zylindrische Achse (4a) zu ermöglichen, so bemessen ist, daß das Positionieren sich mit einem geringen oder gar keinem Kraftaufwand bewerkstelligen läßt,
- daß das Schließen des längsgerichteten Schlitzes (18) einen radial gerichteten Druck auf die elastische Klemm-Masse (13a) oder auf die radialen Klemm-Höcker (13) gewährleistet, der durch die Wirkung eines als nicht umkehrbares Scharnier (17) der die Schwingungsmasse bildenden Einlage (10) dienenden Abschnitts mit verringertem Querschnitt ein Festklemmen in der eingenommenen Position ermöglicht,
und
- daß die zum Schließen des längsgerichteten Schlitzes (18) aufzubringende radiale Kraft (F) so bemessen ist, daß sie das Wiederöffnen des längsgerichteten Schlitzes (18) durch die Kraft des durch die Verformung der elastischen Klemm-Masse (13a) oder der radialen Klemm-Höcker (13) bedingten Druckes verhindert, damit die Befestigung des dynamischen Resonatorelements (7) durch Festklemmen um die zylindrische Achse (4a) gewährleistet ist.

## Claims

1. A dynamic resonating element (7) formed of a sheathing constituting the vibrating mass (10), embedded within an elastomeric compound with appropriate dynamic characteristics, characterised in that the element is capable of being mounted by being passed over a cylindrical axle (4a), such as a torsion bar (4) in a motor vehicle suspension, thanks to the existence of a longitudinal slot (18) made along a generating line and going through the whole thickness of the wall (P) of said dynamic resonating element (7), the element being further characterised in that
- said sheathing constituting the vibrating mass (10) comprises a small-section portion acting as a longitudinal irreversible hinge (17), situated in the plane diametrically opposite the one with the longitudinal slot (18),
said dynamic resonating element (7) comprising, on its inner face, a resilient gripping mass (13a), made of elastomeric compound, intended to fasten it by mounting it tightly on the body (8a) of said cylindrical axle (4a), while retaining functional flexibility in said dynamic resonating element (7).

2. A dynamic resonating element (7) according to Claim 1, characterised in that the resilient gripping mass (13a) has the form of an annular crown with the inner diameter (D).

3. A dynamic resonating element (7) according to Claim 1, characterised in that
- the resilient gripping mass (13a) has the form of radial gripping bosses (13),
in that
- said radial gripping bosses (13) have a practically trapezoidal section, the large base (14) of which is located in contact with the sheathing constituting the vibrating mass (10) and the small base (15) of which points towards the central bore hole (11) defined by a fictitious circle tangent to the set of said small bases (15),
and in that
- the arrangement of said radial gripping bosses (13) is such that the longitudinal slot (18) opens out into a separation gap (19) between two of said radial gripping bosses (13), and that the small-section portion acting as an irreversible hinge (17) is located in the diametrically opposite separation gap (19).

4. A dynamic resonating element (7) according to one of Claims 1 to 3, characterised in that the diameter (D) of its central bore hole (11) has a vaiue comprised between 0.5 and 0.99 times that of the outer diameter (C) of the cylindrical axle (4a), covered if appropriate with a protective lining (16), so that it can be mounted tightly on the cylindrical axle (4a).

5. A dynamic resonating element (7), according to one of Claims 3 or 4, characterised in that radial limit stops (20) made of elastomeric compound, with a practically trapezoidal section, are substituted for some of the radial gripping bosses (13) or are added to the resilient mass (13a) in the form of an annular crown, to damp violent shocks.

6. A dynamic resonating element (7), according to Claim 5, characterised in that the height (h) of the radial limit stops (20) is 20 to 50% less than the height (H) of the radial gripping bosses (13) or the thickness of the resilient mass (13a) in the form of an annular crown.

7. A dynamic resonating element (7), according to one of Claims 1 to 6, characterised in that the small-section portion acting as an irreversible hinge (17) of the sheathing constituting the vibrating mass (10) is smaller by a value of 0.2 to 0.9 than the full section of the cylindrical crown forming said sheathing constituting the vibrating mass (10).

8. A dynamic resonating element (7), according to one of Claims 1 to 7, characterised in that the small-section portion acting as an irreversible hinge (17) takes the form of a symmetrical narrowing in the shape of a diabolo.

9. A dynamic resonating element (7), according to Claim 8, characterised in that the small-section portion acting as an irreversible hinge (17) takes the form of a succession of at least two individual studs (27) separated by one or more cavities (28).

10. A dynamic resonating element (7) according to one of Claims 1 to 7, characterised in that the small-section portion acting as an irreversible hinge (17) takes the form of an asymmetrical notch with a rounded bottom (29).

11. A dynamic resonating element (7) according to one of Claims 1 to 10, characterised in that the sheathing constituting the vibrating mass (10) is intimately linked, by physico-chemical means, to the elastomeric compound within which it is embedded, by in-situ bonding effected at the time of moulding.

12. A dynamic resonating element (7) according to one of Claims 1 to 10, characterised in that the sheathing constituting the vibrating mass (10) is linked, by mechanical means, to the elastomeric compound within which it is embedded through the presence of perforations (30) made in said sheathing constituting the vibrating mass (10), which allow the creation of rubber bridges.

13. A process for mounting a dynamic resonating element (7) in accordance with one of Claims 1 to 12 to the body (8a) of a cylindrical axle (4a), such as a torsion bar (4) intended for a motor vehicle suspension, characterised in that it comprises the following phases:
- positioning, through the existence of a longitudinal slot (18), by passing said cylindrical axle (4a) into the central bore hole (11) of said dynamic resonating element (7), said bore hole being defined either by the thickness of the resilient gripping mass (13a) or by a fictitious circle tangent to the small bases (15) of the radial gripping bosses (13), by means of a width between the lips (26) of said longitudinal slot (18) at least equal to the diameter (C) of the cylindrical axle (4a) covered, if appropriate, with its protective lining (16),
- locking in the mounted position by closing said longitudinal slot (18) by bringing together the lips (26), through the effect of a radial closing force (F),
said process being further characterised in that
- the angle of aperture (A) of the longitudinal slot (18) of said dynamic resonating element (7) to allow it to pass over the cylindrical axle (4a) is such that positioning can take place with little or no effort,
in that
- the closing of said longitudinal slot (18) exerts stress in a radial direction on the resilient gripping mass (13a) or on the radial gripping bosses (13), allowing locking in the mounted position, by the action of a small-section portion acting as an irreversible hinge (17) of the sheathing constituting the vibrating mass (10),
and in that
- the radial force (F) to be applied in order to close said longitudinal slot (18) so as to fasten said dynamic resonating element (7) tightly around the cylindrical axle (4a) is such that it prevents said longitudinal slot (18) from reopening under thrusting effort owing to the precompression of the resilient gripping mass (13a) or the radial gripping bosses (13).
